# EUROPEAN PATENT SPECIFICATION

(11) **EP 3 842 823 B1**
(45) Date of publication and mention of the grant of the patent: **06.11.2024**
(21) Application number: 20210613.4
(22) Date of filing: 30.11.2020
(51) Int. Cl.: G01S 7/03, G01S 7/285

(54) **MICROWAVE SIGNAL RECEIVER**
MIKROWELLENEMPFÄNGER
RÉCEPTEUR DE MICRO-ONDES

(30) Priority: 23.12.2019 IT 201900025285
(43) Date of publication of application: 30.06.2021
(73) Proprietor: MBDA ITALIA S.p.A., 00131 Roma (IT)
(72) Inventor: LIGUORI, Luigi, I- 00131 ROMA (IT)
(74) Representative: Carangelo, Pierluigi

(56) References cited:
- WO-A1-03/081275
- WO-A1-03/105272
- JP-A- 2012 195 676
- JP-A- 2013 090 263

## Description

### FIELD OF THE INVENTION

The present invention relates to a microwave signal receiver. It is applied, for example, in radar systems to protect the receiver components from high power incident signals.

### PRIOR ART

Some microwave signal receivers are known to use power limiters to protect the receiver components from relatively high power incident signals. This happens, for example, in radar system receivers in which the delicate and sensitive components of the receiver must be protected from direct returns from the radar transmitter. Excessively high power signals can impair both the proper functioning of the receiver components and cause irreversible damage to them.

In radar systems, waveguide power limiters are known to be used to protect the receiver components from high power incident signals. A microwave waveguide power limiter is described in the article *"*Investigation and design of microwave waveguide power limiter for communications and radar applications", by Yasser M. Madany and Ahmed F. Miligy, 2015 International Conference on Electromagnetics in Advanced Applications (ICEAA) - IEEE.

The waveguide power limiters have some drawbacks. Indeed, the waveguide power limiters in some applications, e.g. in radar integrated into missile seekers, have a relatively large footprint and weight. Furthermore, the integration and testing operations of a radar system receiver are particularly complex when the receiver has a waveguide limiter operationally connected to a subsequent circuit section of the receiver made as a microstrip, for example. Indeed, separate testing activities are initially required for the waveguide section and the microstrip section of the receiver. After assembly, the entire receiver must be tested both individually and after integration into the radar system.

In general, a microwave signal receiver comprising a waveguide power limiter is bulky, expensive, heavy. Document JP 2013 090263 A describes embodiments of a radar receiver in which the use of a limiter is provided before an SPST (Single Pole Single Throw) switch with an internal resistor or an SPDT (Single Pole Double Throw) switch with an external bypass resistor. In any event, an LNA amplifier is placed immediately downstream of the SPDT or SPDT switch. Due to the presence of the limiter, the aforesaid receiver has relatively long response times because the recovery time of the limiter from saturation state to the linearity state is typically 75ns-100ns.

It is the object of the present invention to provide a microwave signal receiver which makes it possible to solve or at least in part reduce the drawbacks described above with reference to the receivers of the known art described above.

Such an object is achieved by a microwave signal receiver as defined in general in claim 1. Alternative preferred and advantageous embodiments of the aforesaid microwave signal receiver are defined in the accompanying dependent claims.

The invention will be better understood by the following detailed description of a particular embodiment, made by way of example and consequently not limiting in any manner, with reference to the accompanying drawings which are briefly described in the following paragraph. The same or similar elements are identified in such drawings with the same symbols or reference numbers.

### BRIEF DESCRIPTION OF THE DRAWINGS

Figure 1 shows a functional block chart of a radar system comprising a transmitter and a microwave signal receiver.
Figure 2 shows a functional block chart of a non-limiting embodiment of an electronic control system of the microwave signal receiver in figure 1.

### DETAILED DESCRIPTION

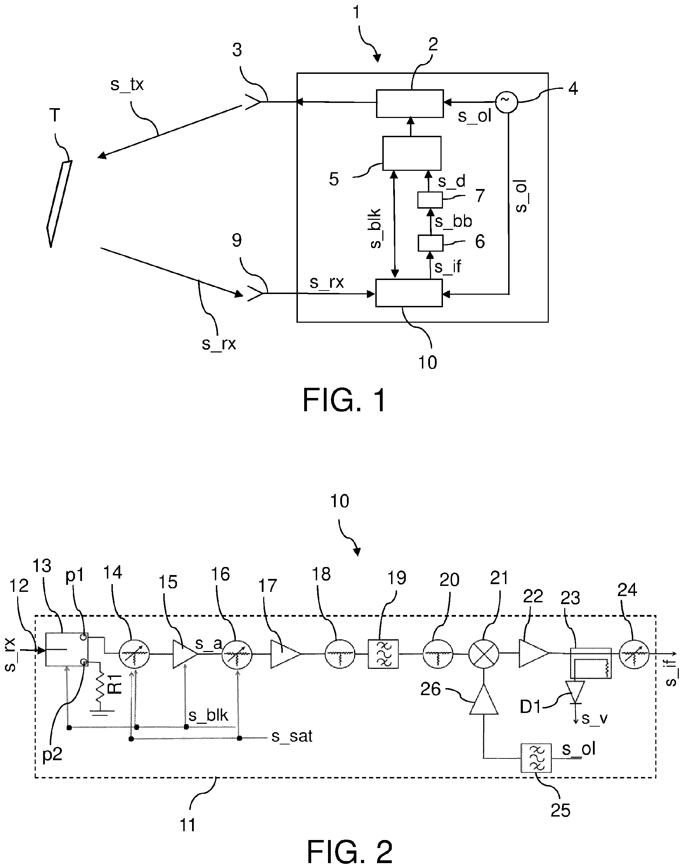

Figure 1 shows a non-exhaustive, non-limiting embodiment of a radar system 1, comprising a transmitter 2 adapted to emit a radar signal s_tx and a microwave signal receiver 10 adapted to receive a radar return signal s_rx. The radar 1 is, for example, intended to be used aboard a missile or rocket and is integrated into the seeker of the missile or rocket.

The radar system 1 further comprises a transmitter antenna 3 operationally connected to the transmitter 2 for remote and radio transmission of the signal produced by the transmitter 2. The transmitting antenna 3 comprises e.g. one or more arrays of radiant antenna elements, e.g. one or more arrays of slot radiant elements. The assembly comprising the transmitter 2 and the transmitter antenna 3 is the transmission front end of the radar system 1.

The radar 1 further comprises a local oscillator 4 adapted to synthesize and provide an oscillator signal s_ol sent in input to both the transmitter 2 and the microwave signal receiver 10. For example, the transmitter 2 comprises a phase modulator, e.g. adapted to modulate the oscillator signal s_ol with a phase code so that it provides in output a signal having a coded pulse sequence which is fed to transmitter antenna 3. Furthermore, the transmitter 2 may comprise one or more amplifiers.

The microwave radio signal output from the transmitting antenna s_tx represents the transmitted radar signal s_tx. For example, the transmitted radar signal s_tx is a signal with a phase coded pulse sequence. As known, the received signal s_rx, also called radar return signal, includes a possible useful signal component, i.e. the signal reflected by a possible T target, and a disturbance signal component, essentially represented by undesired reflections on the ground, water, vegetation or infrastructure and direct returns. The aforesaid radar return signal s_rx further comprises a component due to a direct return in the receiver 10 of the signal s_tx transmitted by the transmitting antenna 3.

The radar system 1 comprises a radio frequency reception front end 9,10 for receiving the radar return signal s_rx, adapted to process the radar return signal received to produce an output signal which is preferably an intermediate frequency signal s_if. In addition to the receiver 10, the radio frequency reception front end 9,10 comprises a receiver antenna 9 for receiving the radar return signal s_rx. For example, the receiving antenna 9 comprises one or more arrays of slot antennas. For the sake of simplicity, the output signal from the antenna 9 was also named return signal s_rx.

Although a radar 1 system comprising a dedicated antenna 3 for transmission and a dedicated reception antenna 9 has been described so far, it is apparent to a person skilled in the art that, e.g. by means of a circulator, the same antenna 3 or antenna system used in transmission can be used for the reception of the radar return signal s_rx.

The radar system 1 also comprises a radar processor 5 operationally connected to both the transmitter 2 and the microwave signal receiver 10. For example, the radar processor 5 is a hardware and software system, comprising at least one processing unit, such as a general purpose or dedicated processor or an FPGA or DSP.

The radar system 1 preferably comprises a frequency conversion module 6 to produce a baseband signal s_bb from the intermediate frequency signal s_if. Furthermore, the radar system 1 preferably comprises an analog to digital converter 7 to convert the baseband s_bb signal produced at the receiver 10 output into a digital sample stream s_d. The analog to digital converter 10 is operationally connected to radar processor 5 to provide the latter with the digital sample stream s_d. According to an alternative embodiment, the analog to digital converter 7 could be integrated into the receiver 10 or the radar processor 5. The radar processor 5 is configured to control the transmitter 2 and the receiver 10 and is preferably also programmed to receive and process the digital sample stream s_d to extract information regarding the presence and/or features of a target T.

A preferred, non-limiting embodiment of a microwave signal receiver 10 will now be described with reference to figure 2. The receiver 10 is represented as a single channel receiver in the functional block chart in figure 2. However, the receiver 10 may have a higher number of channels, mutually in parallel, replicating the diagram in figure 2. For example, if radar system 1 is a monopulse radar system, the receiver 10 could have four parallel channels to process four signals from four respective portions of receiver antenna 9.

According to an embodiment, the microwave signal receiver 10 is such to provide an L-band microwave signal as output. Preferably, the signal s_tx provided in output from the transmission front-end 2, 3 is a Ka-band signal, instead. The same goes for the radar return signal s_rx.

Although the receiver 10 is described in this document as being part of the radar system 1, the teachings of the present description are not limited to this type of receiver 10 and extend to microwave signal receivers not belonging to a radar system, e.g. data telecommunication receivers.

According to the invention, the microwave signal receiver 10 comprises a printed circuit board 11, in particular a microstrip circuit board, comprising an input port 12 adapted to be operatively connected to an antenna 9, and in the example to the receiving antenna 9 of the radar system 1, to receive in input a microwave signal picked up by the antenna 9, which in this example is the radar return signal s rx.

For example, the output signal from the antenna 9 of the receiving front end 9,10 propagates within a waveguide, e.g. a WR28 waveguide, and the receiver 10 further comprises a guide-to-microstrip transition.

The receiver 10 further comprises at least one power dissipator R1 and at least one electronically controllable switch 13 adapted to receive in input the microwave signal s_rx and a first control signal s_blk. For example, the first control signal s_blk is a blanking signal, e.g. supplied to receiver 10 by the radar processor 5. As known, a blanking signal in a radar system makes it possible to mutually synchronize the operation of the transmitter 2 and the receiver 10. According to an advantageous embodiment, the receiver 10 is devoid of a limiter, or any limiter, upstream of the electronically controllable switch 13. In other words, the microwave signal s_rx received at the input of the electronically controllable switch 13 does not pass through any limiter before it is received by the electronically controllable switch 13.

The power dissipator R1 is a termination dissipator (as clearly shown in the diagram in figure 2) and the electronically controllable switch 13 comprises a first output port p1 and the electronically controllable switch 13 is configured to assume according to the control signal s_blk:
- a conduction state to supply the microwave signal s_rx to the first output port p1; and
- a protection state in which the electronically controllable switch 13 is such to send the microwave signal to the power dissipator R1.

If the receiver 10 is integrated into a radar system 1, it is thus apparent that when the electronically controllable switch 13 is in the conduction state, the radar 1 system is in the receiving configuration and when the electronically controllable switch 13 is in the protection state the radar 1 system is in the transmitting configuration.

The microwave signal receiver 10 further comprises at least one low-noise amplifier 15, i.e. an LNA (Low-Noise Amplifier), comprising an input port operationally connected to the first output port p1 of the electronically controllable switch 13 to receive the microwave signal s_rx in input and further comprising an output port to provide an amplified microwave signal s_a in output.

According to a particularly advantageous embodiment, the electronically controllable switch 13 is a PIN diode semiconductor switch. In this manner, a high switching speed of the electronically controllable switch 13 between the protection state and the conduction state and vice versa can be guaranteed. Preferably, the rise and fall times of the electronically controllable switch 13 are less than 10 ns.

Conveniently, the electronically controllable switch 13 has a high power handling, e.g. above 12W, e.g. equal to 13W.

According to a preferred embodiment, the electronically controllable switch 13, when in the protection state, guarantees insulation between the input and the first output port p1 of more than 35dB, e.g. either equal to about, or higher than, 40dB.

According to an advantageous embodiment, the power dissipator R1 comprises a resistor external to the electronically controllable switch 13, preferably a resistor which allows high power to be dissipated in a small volume. For example, such a resistor is an aluminum nitride resistor and is preferably capable of dissipating at least 30W, preferably at least or approximately 40W, in Ka-band at a temperature of 50°C.

According to the invention, the electronically controllable switch 13 is an SPDT - Single Pole Double Throw Switch - having a second output port p2 operationally connected to the power dissipator R1. In the protection state, the electronically controllable switch 13 is configured to make the microwave signal s_rx available to the second output port p2 so that the microwave signal s_rx can be routed to the dissipator R1.

According to a particularly advantageous embodiment, which makes it possible to increase the robustness of the receiver 10 relative to received high power signals to a greater extent, the low-noise amplifier 15 is adapted to assume an on and off state and is configured to assume:
- the on state when the electronically controllable switch 13 is in the conduction state; and
- the off state when the electronically controllable switch 13 is in the protection state.

For example, the low-noise amplifier 15 is also adapted and configured to receive the aforesaid first control signal s_blk, or in any event, a control signal correlated to it and is configured to assume the on state or off state based on the first control signal s_blk. As explained above, the first control signal s_blk can be a blanking signal.

According to the invention, the microwave signal receiver 10 also comprises an electronically controllable attenuator 14 operationally interposed between the electronically controllable switch 13 and the low-noise amplifier 15 to attenuate the microwave signal s_rx. In this case, the microwave signal receiver 10 is configured to control the electronically controllable attenuator 14 so that it assumes a first state in which the attenuator 14 has a relatively high attenuation and a second state in which attenuator 14 has relatively low attenuation, and in which the electronically controllable attenuator 14 assumes the first state when the electronically controllable switch 13 assumes the protection state.

For example, the electronically controllable attenuator 14 is adapted and configured to receive the aforesaid first control signal s_blk, or in any event, a control signal correlated to it and is configured to assume the relatively high attenuation state or the relatively low attenuation state based on the first control signal s_blk. As explained above, the first control signal can be a blanking signal.

For example, the electronically controllable attenuator 14 in the relatively high attenuation state has an attenuation greater than 30dB, e.g. equal to 40dB, or about 40dB. For example, in the relatively high attenuation state, the attenuator 14 is controlled to provide its maximum attenuation.

Preferably, in the relatively low attenuation state, the attenuator 14 is controlled to minimize its insertion loss.

Conveniently, the electronically controllable attenuator 14 is a voltage controllable variable attenuator.

Again with reference to the diagram in figure 2, if the receiver 10 is the receiver of a radar system 1, during the transmission of the signal s_tx by the transmission front-end 2,3, the receiver 10 can be controlled by the first control signal s_blk, which is, for example, a blanking signal, to bring the electronically controllable switch 13 to the protection state, the electronically controllable attenuator 14 to the relatively high attenuation state and the low-noise amplifier 15 to off state at the same time. In this manner, very strong attenuations were surprisingly achieved, even above 90dB, e.g. about 100dB.

When the electronically controllable switch 13 is in the conduction state, the provision of an electronically controllable attenuator 14 also makes it advantageously possible to manage the dynamics of the microwave signal receiver 10 so that it can operate in a linearity condition, i.e. to prevent the receiver 10 from operating in a saturation condition. In this regard, in an advantageous embodiment, the receiver 10 comprises a saturation estimate module 23, D1 of the receiver 10 adapted to detect whether the receiver 10 is in a saturation state or a linearity state. The receiver 10 is configured to control the electronically controllable attenuator 14 so that it assumes a third state in which it has an intermediate attenuation between the relatively high attenuation and the relatively low attenuation, e.g. equal to about 10dB. When the electronically controllable switch 13 is in the conduction state, the receiver 10 is configured to control the electronically controllable attenuator 14 so that it assumes the second state if the receiver 10 is in the saturation state. Instead, when the electronically controllable switch 13 is in the conduction state, the receiver 10 is configured to control the electronically controllable attenuator 14 so that it assumes the third state if the receiver 10 is in the saturation state.

Preferably, the saturation estimation module 23, D1 is such to detect a saturating signal to supply a second control signal s_sat to the electronically controllable attenuator 14. Therefore, according to a particularly advantageous embodiment, the electronically controllable attenuator 14 is adapted and configured to receive both the first control signal s_blk and the second control signal s_sat, e.g. with an input port which produces the OR logic function between such control signals. Clearly, from a practical point of view, it is also possible for the electronically controllable attenuator 14 to receive a single control signal obtained from the first control signal s_blk and the second control signal s_sat by means of an appropriate logic.

In the particular example shown, the saturation estimation block 23, D1 comprises a coupler 23 adapted and configured to tap a part of the received signal from the reception chain. It is possible to estimate the strength of such a tapped signal to detect whether the receiver 10 is in linearity or saturation. For example, the saturation estimation block 23, D1 comprises a detector diode D1 which provides a voltage output s_v starting from the tapped signal. By comparing this voltage s_v with a threshold voltage Vth it is possible to produce the second s_sat control signal as a binary signal, which assumes a first value when the voltage s_v is higher than the threshold voltage and a second value otherwise. It is, therefore, possible to establish that the receiver 10 is in a linearity condition when the second control signal s_sat assumes the first value and the receiver 10 is in a linearity condition when the second control signal s_sat assumes the second value.

According to a preferred embodiment, the receiver 10 further comprises a further electronically controllable attenuator 16 which is arranged downstream of the low-noise amplifier 15. In the particular example shown in figure 2, this additional attenuator 16 is only controlled based on the second control signal s_sat to manage the dynamics of the receiver 10 more flexibly and to ensure that the receiver works in linearity conditions when the electrically controllable switch 13 is in the conduction state.

According to a preferred, non-limiting embodiment, the receiver 10 further comprises an additional low-noise amplifier 17 and a fixed attenuator 18 downstream of the low-noise amplifier 15, in particular downstream of the additional attenuator 16. For example, the latter is intended to achieve a tuning gain of the receiver 10.

Conveniently, the receiver 10 comprises downstream of the low-noise amplifier 15, in the example in figure 2 downstream of the fixed attenuator 18, a band-pass filter 19 for image signal rejection, preferably followed by an additional fixed attenuator 20.

According to an embodiment, the receiver 10 further comprises a frequency converter 21, such as a mixer, having an input port operationally connected to the output port of the low-noise amplifier 15 to convert the amplified microwave signal s_a, and in the example also attenuated and filtered, into an intermediate frequency signal s_if.

In a particularly advantageous embodiment, the saturation estimation module 23, D1 is such to detect whether the receiver 10 is in a saturation state or a linearity state starting from an amplitude or signal power measurement at intermediate frequency s_if. This is in accordance with the example shown in figure 2, where the saturation estimation module 23, D1, the operation of which is shown above, is located downstream of the frequency converter 21.

According to a particularly advantageous embodiment, the frequency converter 21 is fed with the oscillator signal s_ol supplied by a local oscillator 4 and the receiver 10 comprises a bandpass filter 25 operationally interposed between the frequency converter 21 and the local oscillator 4 to filter the oscillator signal s_ol before supplying in input to the frequency converter 21. This device advantageously reduces the spurious components caused by the s_ol oscillator signal generated by local oscillator 4. Preferably, between bandpass filter 25 and frequency converter 21, receiver 10 comprises an amplifier 26 which then acts as a driver for frequency converter 21.

In particular, given:
- Frf as the frequency of the input signal s_rx to the receiver 10;
- Fol as the frequency of the oscillator signal s_ol;
- Fif as the intermediate frequency of the signal s_if supplied in output of the receiver 10;
by virtue of the presence of the bandpass filter 19, the receiver 10 makes it possible to reduce the spurious components of the oscillator signal s_ol at the frequencies Fol+Fif, Fol-Fif and Fif.

Such spurious components are particularly harmful to receiver 10 because they can generate residues at the intermediate frequency Fif of the receiver 10 and thus in case of weak signals such spurious components may overlap the useful signal masking it and thus reducing the sensitivity of the receiver 10.

For this reason, the band-pass filter 25, e.g. made as a microstrip, is preferably centered at the frequency Fol. Preferably, such a bandpass filter 25 is adapted and configured to attenuate the spurious components present at the frequencies Frf±Fif by more than 15 dB and spurious components present at the frequency Fif by about 80 dB.

According to an embodiment, the receiver 10 further comprises an intermediate frequency amplifier 22 and a step attenuator 24 downstream of the frequency converter 21 to allow further adjustment of the reception chain gain.

From the above, it is apparent that a microwave signal receiver of the type described above makes it possible to fully achieve the set objects in terms of overcoming the drawbacks of the prior art.

Notwithstanding the principle of the invention, embodiments and details may be greatly varied with respect to what has been described and illustrated herein exclusively by way of non-limiting example.

The scope of protection of the invention is defined in the appended claims.

## Claims

1. A microwave signal receiver (10) comprising a printed circuit board (11), in particular a microstrip circuit board, comprising an input port adapted to be operatively connected to an antenna (9) for receiving in input a microwave signal (s_rx) picked up by the antenna (9), wherein the microwave signal receiver (10) comprises:
- at least one power dissipator (R1);
- an electronically controllable switch (13) adapted to receive in input the microwave signal (s_rx) and a first control signal (s_blk), wherein the electronically controllable switch (13) comprises a first output port (p1) and wherein, based on the control signal, the electronically controllable switch (13) is configured to assume a conduction state to supply the microwave signal (s_rx) to the first output port (p1), and a protection state in which the electronically controllable switch (13) is such as to send the microwave signal (s_rx) to the power dissipator (R1);
- at least one low-noise figure amplifier (15) comprising an input port operatively connected to the first output port (p1)and further comprising an output port for supplying in output an amplified microwave signal (s_a);
wherein:
- the electronically controllable switch (13) is an SPDT - Single Pole Double Throw - switch having a second output port (p2) operationally connected to the power dissipator (R1) and wherein in the protection state the electronically controllable switch (13) is configured to make the microwave signal (s_rx) available to the second output port (p2);
- the power dissipator (R1) is a termination dissipator; **characterized in that** the microwave signal receiver (10) further comprises an electronically controllable attenuator (14) operatively interposed between the electronically controllable switch (13) and the low-noise figure amplifier (15) for attenuating the microwave signal (s_rx), and wherein the receiver (10) is configured to control the attenuator (14) so that the latter assumes a first state in which it has a relatively high attenuation, and a second state in which it has relatively low attenuation, and wherein the electronically controllable attenuator (14) assumes the first state when the electronically controllable switch (13) assumes the protection state.

2. A microwave signal receiver (10) according to claim 1, wherein the electronically controllable switch (13) is a PIN diode semiconductor switch.

3. A microwave signal receiver (10) according to claims 1 or 2, wherein the at least one power dissipator (R1) comprises a resistor external to the electronically controllable switch (13), preferably a resistor which allows high power to be dissipated in a small volume.

4. A microwave signal receiver (10) according to claim 3, wherein the resistor is an aluminum nitride resistor.

5. A microwave signal receiver (10) according to any one of the preceding claims, wherein the receiver (10) is devoid of limiter upstream of the electronically controllable switch (13).

6. A microwave signal receiver (10) according to any one of the preceding claims, wherein the low-noise figure amplifier (15) is adapted to assume an on state and an off state, and wherein the low-noise figure amplifier is configured to assume the on state when the electronically controllable switch (13) is in the conduction state and the off state when the electronically controllable switch (13) is in the protection state.

7. A microwave signal receiver (10) according to claim 6, wherein said amplifier (15) is adapted to receive said first control signal (s_blk) and is configured to assume the on state or the off state based on the first control signal (s_blk).

8. A microwave signal receiver (10) according to claim 1, wherein:
- the receiver (10) comprises a saturation estimate module (23,D1) of the receiver (10) adapted to detect whether the receiver (10) is in a saturation state or a linearity state;
- the receiver (10) is configured to control the electronically controllable attenuator (13) so that it assumes a third state in which it has an intermediate attenuation between the relatively high attenuation and the relatively low attenuation;
- when the electronically controllable switch (13) is in the conduction state, the receiver (10) is configured to control the electronically controllable attenuator (14) so that it assumes the second state if the receiver (10) is in the linearity state and so that it assumes the third state if the receiver (10) is in the saturation state.

9. A microwave signal receiver (10) according to claim 1, wherein the electronically controllable attenuator (14) is a voltage controllable variable attenuator.

10. A microwave signal receiver (10) according to claim 1, comprising a further electronically controllable attenuator (16) arranged downstream of the low-noise amplifier (15).

11. A microwave signal receiver (10) according to any one of the preceding claims, further comprising a frequency converter (21) having an input port operatively connected to the output port of the low-noise figure amplifier (15) for converting the amplified microwave signal (s_a) into an intermediate frequency signal (s_if).

12. A microwave signal receiver (10) according to claims 8 and 11, wherein the saturation estimation module (23, D1) is such to detect whether the receiver (10) is in a saturation state or a linearity state starting from an amplitude or power strength measurement of the intermediate frequency signal (s_if).

13. A microwave signal receiver (10) according to claims 11 or 12, wherein the frequency converter is fed with an oscillator signal (s_ol) supplied by a local oscillator (4) and wherein the receiver (10) comprises a bandpass filter (25) operationally interposed between the frequency converter (21) and the local oscillator (4) to filter the oscillator signal (s_ol) before supplying in input to the frequency converter (21).

14. A radar system (1) comprising a microwave signal receiver (10) according to any one of the preceding claims and a transmitter (2), wherein the radar system (1) is adapted and configured to switch selectively between an operating transmission state and an operating reception state, and wherein:
- the electronically controllable switch (13) assumes the protection state when the radar system (1) is in the operating transmission state;
- the electronically controllable switch (13) assumes the conduction state when the radar system (1) is in the operating reception state.

## Patentansprüche

1. Mikrowellenempfänger (10), der eine gedruckte Leiterplatte (11), insbesondere eine Mikrostreifenleiterplatte, umfasst, die einen Eingangsanschluss umfasst, der dazu ausgebildet ist, operativ mit einer Antenne (9) verbunden zu werden, um am Eingang ein von der Antenne (9) aufgefangenes Mikrowellensignal (s_rx) zu empfangen, wobei der Mikrowellenempfänger (10) umfasst:
- mindestens einen Leistungsableiter (R1);
- einen elektronisch steuerbaren Schalter (13), der dazu ausgebildet ist, am Eingang das Mikrowellensignal (s_rx) und ein erstes Steuersignal (s_blk) zu empfangen, wobei der elektronisch steuerbare Schalter (13) einen ersten Ausgangsanschluss (p1) umfasst und wobei der elektronisch steuerbare Schalter (13) dazu konfiguriert ist, auf Grundlage des Steuersignals einen Leitungszustand, um das Mikrowellensignal (s_rx) an den ersten Ausgangsanschluss (p1) zu liefern, und einen Schutzzustand einzunehmen, in dem der elektronisch steuerbare Schalter (13) derart ist, dass er das Mikrowellensignal (s_rx) an den Leistungsableiter(R1) sendet;
- mindestens einen Verstärker (15) mit niedriger Rauschzahl, der einen Eingangsanschluss umfasst, der operativ mit dem ersten Ausgangsanschluss (p1) verbunden ist, und der ferner einen Ausgangsanschluss zum Liefern eines verstärkten Mikrowellensignals (s_a) am Ausgang umfasst;
wobei:
- der elektronisch steuerbare Schalter (13) ein SPDT(Single Pole Double Throw)-Schalter ist, der einen zweiten Ausgangsanschluss (p2) aufweist, der betriebsmäßig mit dem Leistungsableiter (R1) verbunden ist, und wobei der elektronisch steuerbare Schalter (13) im Schutzzustand dazu konfiguriert ist, das Mikrowellensignal (s_rx) dem zweiten Ausgangsanschluss (p2) zur Verfügung zu stellen;
- der Leistungsableiter (R1) ein Abschlussableiter ist;
**dadurch gekennzeichnet, dass** der Mikrowellenempfänger (10) ferner ein elektronisch steuerbares Dämpfungsglied (14) umfasst, das operativ zwischen dem elektronisch steuerbaren Schalter (13) und dem Verstärker (15) mit niedriger Rauschzahl zum Dämpfen des Mikrowellensignals (s_rx) angeordnet ist, und wobei der Empfänger (10) dazu konfiguriert ist,
das Dämpfungsglied (14) so zu steuern, dass Letzteres einen ersten Zustand, in dem es eine relativ hohe Dämpfung aufweist, und einen zweiten Zustand einnimmt, in dem es eine relativ geringe Dämpfung aufweist, und wobei das elektronisch steuerbare Dämpfungsglied (14) den ersten Zustand einnimmt, wenn der elektronisch steuerbare Schalter (13) den Schutzzustand einnimmt.

2. Mikrowellenempfänger (10) nach Anspruch 1, wobei der elektronisch steuerbare Schalter (13) ein PIN-Dioden-Halbleiterschalter ist.

3. Mikrowellenempfänger (10) nach Anspruch 1 oder 2, wobei der mindestens eine Leistungsableiter (R1) einen Widerstand außerhalb des elektronisch steuerbaren Schalters (13) umfasst, vorzugsweise einen Widerstand, der das Umwandeln hoher Leistung in ein kleines Volumen ermöglicht.

4. Mikrowellenempfänger (10) nach Anspruch 3, wobei der Widerstand ein Aluminiumnitridwiderstand ist.

5. Mikrowellenempfänger (10) nach einem der vorhergehenden Ansprüche, wobei der Empfänger (10) keinen dem elektronisch steuerbaren Schalter (13) vorgelagerten Begrenzer aufweist.

6. Mikrowellenempfänger (10) nach einem der vorhergehenden Ansprüche, wobei der Verstärker (15) mit niedriger Rauschzahl dazu ausgebildet ist, einen Ein-Zustand und einen Aus-Zustand einzunehmen, und wobei der Verstärker mit niedriger Rauschzahl dazu konfiguriert ist, den Ein-Zustand einzunehmen, wenn sich der elektronisch steuerbare Schalter (13) im Leitungszustand befindet, und den Aus-Zustand einzunehmen, wenn sich der elektronisch steuerbare Schalter (13) im Schutzzustand befindet.

7. Mikrowellenempfänger (10) nach Anspruch 6, wobei der Verstärker (15) dazu ausgebildet ist, das erste Steuersignal (s_blk) zu empfangen, und dazu konfiguriert ist, auf Grundlage des ersten Steuersignals (s_blk) den Ein-Zustand oder den Aus-Zustand einzunehmen.

8. Mikrowellenempfänger (10) nach Anspruch 1, wobei:
- der Empfänger (10) ein Sättigungsschätzmodul (23, D1) des Empfängers (10) umfasst, das dazu ausgebildet ist, zu erkennen, ob sich der Empfänger (10) in einem Sättigungszustand oder einem Linearitätszustand befindet,
- der Empfänger (10) dazu konfiguriert ist, das elektronisch steuerbare Dämpfungsglied (13) so zu steuern, dass es einen dritten Zustand einnimmt, in dem es eine Zwischendämpfung zwischen der relativ hohen Dämpfung und der relativ niedrigen Dämpfung aufweist;
- wenn sich der elektronisch steuerbare Schalter (13) im Leitungszustand befindet, der Empfänger (10) dazu konfiguriert ist, das elektronisch steuerbare Dämpfungsglied (14) so zu steuern, dass es den zweiten Zustand einnimmt, wenn sich der Empfänger (10) im Linearitätszustand befindet, und dass es den dritten Zustand einnimmt, wenn sich der Empfänger (10) im Sättigungszustand befindet.

9. Mikrowellenempfänger (10) nach Anspruch 1, wobei das elektronisch steuerbare Dämpfungsglied (14) ein spannungssteuerbares variables Dämpfungsglied ist.

10. Mikrowellenempfänger (10) nach Anspruch 1, der ein weiteres elektronisch steuerbares Dämpfungsglied (16) umfasst, das dem rauscharmen Verstärker (15) nachgelagert angeordnet ist.

11. Mikrowellenempfänger (10) nach einem der vorhergehenden Ansprüche, der ferner einen Frequenzumwandler (21) umfasst, der einen Eingangsanschluss aufweist, der operativ mit dem Ausgangsanschluss des Verstärkers (15) mit niedriger Rauschzahl verbunden ist, um das verstärkte Mikrowellensignal (s_a) in ein Zwischenfrequenzsignal (s_if) umzuwandeln.

12. Mikrowellenempfänger (10) nach den Ansprüchen 8 und 11, wobei das Sättigungsschätzmodul (23, D1) derart beschaffen ist, dass es ausgehend von einer Amplituden- oder Leistungsstärkemessung des Zwischenfrequenzsignals (s_if) erkennt, ob sich der Empfänger (10) in einem Sättigungszustand oder einem Linearitätszustand befindet.

13. Mikrowellenempfänger (10) nach Anspruch 11 oder 12, wobei der Frequenzumsetzer mit einem von einem lokalen Oszillator (4) gelieferten Oszillatorsignal (s_ol) gespeist wird und wobei der Empfänger (10) ein Bandpassfilter (25) umfasst, das betriebsmäßig zwischen dem Frequenzumsetzer (21) und dem lokalen Oszillator (4) angeordnet ist, um das Oszillatorsignal (s_ol) zu filtern, bevor es dem Frequenzumsetzer (21) am Eingang geliefert wird.

14. Radarsystem (1), das einen Mikrowellenempfänger (10) nach einem der vorhergehenden Ansprüche und einen Sender (2) umfasst, wobei das Radarsystem (1) dazu ausgebildet und konfiguriert ist, selektiv zwischen einem Sendebetriebszustand und einem Empfangsbetriebszustand umzuschalten, und wobei:
- der elektronisch steuerbare Schalter (13) den Schutzzustand einnimmt, wenn sich das Radarsystem (1) im Sendebetriebszustand befindet,
- der elektronisch steuerbare Schalter (13) den Leitungszustand einnimmt, wenn sich das Radarsystem (1) im Empfangsbetriebszustand befindet.

## Revendications

1. Récepteur (10) de signaux micro-ondes comprenant une carte de circuit imprimé (11), en particulier une carte de circuit micro-ruban, comprenant un port d'entrée conçu pour être connecté de manière opérationnelle à une antenne (9) pour recevoir en entrée un signal micro-onde (s_rx) capté par l'antenne (9), dans lequel le récepteur (10) de signaux micro-ondes comprend :
- au moins un dissipateur de puissance (R1) ;
- un commutateur (13) à commande électronique conçu pour recevoir en entrée le signal micro-onde (s_rx) et un premier signal de commande (s_blk), dans lequel le commutateur (13) à commande électronique comprend un premier port de sortie (p1)et dans lequel, en fonction du signal de commande, le commutateur (13) à commande électronique est configuré pour adopter un état de conduction pour fournir le signal micro-onde (s_rx) au premier port de sortie (p1), et un état de protection dans lequel le commutateur (13) à commande électronique est conçu pour envoyer le signal micro-onde (s_rx) au dissipateur de puissance (R1) ;
- au moins un amplificateur à faible bruit (15) comprenant un port d'entrée connecté de manière opérationnelle au premier port de sortie (p1) et comprenant en outre un port de sortie destiné à fournir en sortie un signal micro-onde amplifié (s_a) ;
dans lequel :
- le commutateur (13) à commande électronique est un commutateur SPDT (unipolaire, bidirectionnel) ayant un second port de sortie (p2) connecté de manière opérationnelle au dissipateur de puissance (R1) et dans lequel, dans l'état de protection, le commutateur (13) à commande électronique est configuré pour rendre le signal micro-onde (s_rx) disponible pour le second port de sortie (p2) ;
- le dissipateur de puissance (R1) est un dissipateur de terminaison ;
**caractérisé en ce que** le récepteur (10) de signaux micro-ondes comprend en outre un atténuateur (14) à commande électronique interposé de manière opérationnelle entre le commutateur (13) à commande électronique et l'amplificateur à faible bruit (15) pour atténuer le signal micro-onde (s_rx), et dans lequel le récepteur (10) est configuré pour commander l'atténuateur (14) de sorte que ce dernier adopte un premier état dans lequel il présente une atténuation relativement élevée, et un deuxième état dans lequel il présente une atténuation relativement faible, et dans lequel l'atténuateur (14) à commande électronique adopte le premier état lorsque le commutateur (13) à commande électronique adopte l'état de protection.

2. Récepteur (10) de signaux micro-ondes selon la revendication 1, dans lequel le commutateur (13) à commande électronique est un commutateur à semi-conducteur à diode PIN.

3. Récepteur (10) de signaux micro-ondes selon les revendications 1 ou 2, dans lequel le ou les dissipateurs d'énergie (R1) comprennent une résistance externe au commutateur (13) à commande électronique, de préférence une résistance qui permet de dissiper une puissance élevée dans un petit volume.

4. Récepteur (10) de signaux micro-ondes selon la revendication 3, dans lequel la résistance est une résistance au nitrure d'aluminium.

5. Récepteur (10) de signaux micro-ondes selon l'une quelconque des revendications précédentes, dans lequel le récepteur (10) est dépourvu de limiteur en amont du commutateur (13) à commande électronique.

6. Récepteur (10) de signaux micro-ondes selon l'une quelconque des revendications précédentes, dans lequel l'amplificateur à faible bruit (15) est conçu pour adopter un état activé et un état désactivé, et dans lequel l'amplificateur à faible bruit est configuré pour adopter l'état activé lorsque le commutateur (13) à commande électronique est dans l'état de conduction et l'état désactivé lorsque le commutateur (13) à commande électronique est dans l'état de protection.

7. Récepteur (10) de signaux micro-ondes selon la revendication 6, dans lequel ledit amplificateur (15) est conçu pour recevoir ledit premier signal de commande (s_blk) et est configuré pour adopter l'état activé ou l'état désactivé en fonction du premier signal de commande (s_blk).

8. Récepteur (10) de signaux micro-ondes selon la revendication 1, dans lequel :
- le récepteur (10) comprend un module d'estimation de saturation (23, D1) du récepteur (10) conçu pour détecter si le récepteur (10) est dans un état de saturation ou un état de linéarité ;
- le récepteur (10) est configuré pour commander l'atténuateur (13) à commande électronique de sorte qu'il adopte un troisième état dans lequel il présente une atténuation intermédiaire entre l'atténuation relativement élevée et l'atténuation relativement faible ;
- lorsque le commutateur (13) à commande électronique est dans l'état de conduction, le récepteur (10) est configuré pour commander l'atténuateur (14) à commande électronique de sorte qu'il adopte le deuxième état si le récepteur (10) est dans l'état de linéarité et de sorte qu'il adopte le troisième état si le récepteur (10) est dans l'état de saturation.

9. Récepteur (10) de signaux micro-ondes selon la revendication 1, dans lequel l'atténuateur (14) à commande électronique est un atténuateur variable à commande de tension.

10. Récepteur (10) de signaux micro-ondes selon la revendication 1, comprenant un autre atténuateur (16) à commande électronique, disposé en aval de l'amplificateur à faible bruit (15).

11. Récepteur (10) de signaux micro-ondes selon l'une quelconque des revendications précédentes, comprenant en outre un convertisseur de fréquence (21) ayant un port d'entrée connecté de manière opérationnelle au port de sortie de l'amplificateur à faible bruit (15) pour convertir le signal micro-onde amplifié (s_a) en un signal de fréquence intermédiaire (s_if).

12. Récepteur (10) de signaux micro-ondes selon les revendications 8 et 11, dans lequel le module d'estimation de saturation (23, D1) est tel qu'il détecte si le récepteur (10) est dans un état de saturation ou un état de linéarité à partir d'une mesure d'intensité de puissance ou d'amplitude du signal de fréquence intermédiaire (s_if).

13. Récepteur (10) de signaux micro-ondes selon les revendications 11 ou 12, dans lequel le convertisseur de fréquence est alimenté par un signal d'oscillateur (s_ol) fourni par un oscillateur local (4) et dans lequel le récepteur (10) comprend un filtre passe-bande (25) interposé de manière opérationnelle entre le convertisseur de fréquence (21) et l'oscillateur local (4) pour filtrer le signal d'oscillateur (s_ol) avant de le fournir en entrée au convertisseur de fréquence (21).

14. Système radar (1) comprenant un récepteur (10) de signaux micro-ondes selon l'une quelconque des revendications précédentes et un émetteur (2), dans lequel le système radar (1) est conçu et configuré pour commuter sélectivement entre un état opérationnel d'émission et un état opérationnel de réception, et dans lequel :
- le commutateur (13) à commande électronique adopte l'état de protection lorsque le système radar (1) est dans l'état opérationnel d'émission ;
- le commutateur (13) à commande électronique adopte l'état de conduction lorsque le système radar (1) est dans l'état opérationnel de réception.
